# EUROPEAN PATENT APPLICATION

(11) **EP 4 629 205 A1**
(43) Date of publication of application: **08.10.2025**
(21) Application number: 24168483.6
(22) Date of filing: 04.04.2024
(51) Int. Cl.: G07C 9/00, G07C 9/37, B60R 25/25, B60R 25/30

(54) **UNLOCKING SYSTEM, AND METHOD IMPLEMENTED IN AN ELECTRONIC SYSTEM**

(71) Applicant: Valeo Comfort and Driving Assistance, 94000 Créteil (FR)
(72) Inventor: BARAKAT, Basem, 94000 Créteil (FR); BENMOKHTAR, Rachid, 94000 Créteil (FR); MUSABINI, Antonyo, 94000 Créteil (FR)
(74) Representative: Delplanque, Arnaud

(57) **Abstract**

The invention relates to an unlocking system (10) for a movable panel of a vehicle.

According to the invention, the unlocking system comprises:
- an imaging device (12) configured to capture at least one image in a region surrounding the vehicle,
- a map generation module (13) configured to generate a map representing at least a portion of an environment of the vehicle, and
- a biometric recognition device (14), configured to identify a user of the vehicle from the at least one image provided by the imaging device and the map generated by the map generation module.

## Description

### TECHNICAL FIELD OF THE INVENTION

The present invention relates to unlocking systems used, for example, in vehicles.

More particularly, it concerns an unlocking system comprising a biometric recognition device.

The invention applies particularly advantageously to verify the identity of the user of a vehicle and authorize door operation.

### BACKGROUND INFORMATION AND PRIOR ART

The principle behind biometric recognition is to identify the user of a vehicle with one or several devices configured to collect and analyze various biometric features of an individual and compare them with those stored in the vehicle's electronic system, in order to identify a registered user of the vehicle.

To this end, today's vehicles use various biometric recognition techniques, alone or in combination, such as gait analysis or facial recognition, and image analysis techniques such as semantic segmentation or instance segmentation.

### SUMMARY OF THE INVENTION

However, the existing techniques do not take into account the road environment of the vehicle or user's habits and preferences when giving access to a registered user of the vehicle.

Therefore, there is a need for a simple, effective unlocking system that anticipates the user's needs and intentions, while contextualizing access to the vehicle.

In this context, the invention proposes such an unlocking system, comprising an imaging device configured to capture at least one image in a region surrounding the vehicle, a map generation module configured to generate a map representing at least a portion of an environment of the vehicle, and a biometric recognition device, configured to identify a user of the vehicle from the at least one image provided by the imaging device and the map generated by the map generation module.

The system provides a detailed and dynamic representation of the road environment and the user's habits and preferences, which can improve the user experience and safety of vehicle access.

The map allows to verify the driver's identity and authorize the movable panel operation, based, for example, on the user's parking location and/or orientation and/or behaviour and/or age.

According to other optional (and therefore non-limiting) features:
- the biometric recognition device is further configured to determine a confidence score associated with the user identity and compare the confidence score to a threshold value.
- the map comprises the user's parking location and/or surrounding vehicles trajectories and/or surrounding vehicles speed and/or surrounding lane-by-lane traffic volumes and/or surrounding vehicles queues lengths and/or user's habits and preferences,
- the biometric recognition device is further configured to identify the user's orientation and/or the user's behaviour and/or the user's age and/or user's accessories and/or worn clothes,
- the unlocking system further comprises a feedback and guidance module configured to provide feedback and guidance for the user of the vehicle.

The invention also proposes a method implemented in an electronic system equipping a vehicle, the method comprising the following steps:
E11) capturing at least one image in a region surrounding the vehicle,
E21) generating a map representing at least a portion of an environment of the vehicle,
E31) identifying a user of the vehicle from the at least one captured image and from the generated map.

According to other optional (and therefore non-limiting) features:
- the step for identifying E31) comprises determining a confidence score associated with the determined user identity and comparing the confidence score to a threshold value,
- If the user is identified in step E31), and the confidence score is equal or greater than the threshold value, a step E41) of unlocking the vehicle movable panel is provided.

- if the unlocking step E41) is carried out, a feedback and advice step E51) for the vehicle user is provided,
- the threshold value is determined based on the map.

The invention also provides a computer program product comprising one or more sequences of instructions which are accessible to a processor and which, when executed by said processor, cause said processor to implement a process according to one of the possible embodiments.

The invention also proposes a non-transitory information storage medium, in which it stores one or more instruction sequences accessible to a processor and which, when executed by said processor, cause said processor to implement a process according to one of the possible embodiments.

The various features, variants and embodiments of the invention can be combined with one another in various ways, as long as they are not incompatible or mutually exclusive.

### DETAILED DESCRIPTION OF EXAMPLE(S)

In addition, various other features of the invention are apparent from the appended description with reference to the drawings, which illustrate non-limiting embodiments of the invention and in which:
[Fig. 1] is a schematic representation of a vehicle with imaging devices facing outwards and the area of detection of the cameras. Figure 1 also shows individuals and objects in the vicinity of the vehicle.
[Fig. 2] is a block diagram of a vehicle comprising an unlocking system according to one embodiment of the invention, and
[Fig. 3] is a summary diagram of a method for unlocking the movable panel of a vehicle using the unlocking system shown in [Fig. 2] according to one embodiment of the invention.

It should be noted that in these figures, structural and/or functional elements common to the different variants may have the same references.

### Device

As is appropriate, detailed embodiments of the present disclosure are disclosed herein; however, it should be understood that the disclosed embodiments are only examples of the invention, which can be implemented in various and alternative forms. The figures do not necessarily represent a detailed design; some diagrams may be exaggerated or minimized to show an overview of the function. Therefore, the specific structural and functional details disclosed herein are not to be construed as limiting, but merely as a representative basis for teaching a person skilled in the art to use the present invention in a variety of ways.

It is understood that the specific devices and method illustrated in the accompanying drawings, and described in the following specification, are merely exemplary embodiments of the inventive concepts defined in the appended claims. Accordingly, the specific dimensions and other physical characteristics relating to the embodiments disclosed herein are not to be considered limiting, unless the claims expressly state otherwise.

In this document, the term "and/or", when used in a list of two or more items, means that any one of the items listed may be used alone, or that any combination of two or more items in the list may be used.

The terms "the," "a," or "an," mean "at least one," and are not limited to "only one" unless explicitly indicated to the contrary. For example, "a component" includes embodiments having two or more such components unless the context clearly indicates otherwise.

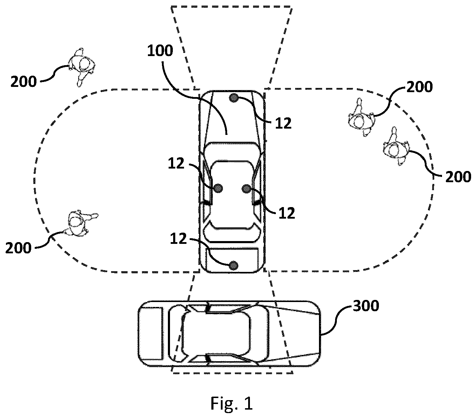

A vehicle 100 equipped with imaging devices 12 is shown in [Fig. 1]. In the embodiment shown, the vehicle 100 is a car. In the vicinity of the vehicle 100, individuals 200 and objects 300 are represented as well as the imaging devices 12 viewing angles and ranges. The combination of an angle of view and a range constitutes a detection area within which an element such as an object or a living being can be detected.

According to the invention, the vicinity to the vehicle 100 is defined by the range of the imaging devices 12, which is, for example, 15 meters. The imaging devices 12 may consist of a plurality of different detectors each with a different range, for example 15 meters for a first type of detector and 10 meters for a second type of detector. In the preferred embodiment of the invention, the detectors are chosen to all have the same range, for example, 15 meters. Advantageously, this enables the different types of detectors to operate in concert over a common detection range.

In the considered embodiment, the imaging devices 12 are located on different sides of the vehicle 100, for example, on the roof and/or on opposite lateral sides and/or near the roof and forward of the B-pillars, and/or near the roof and rearward of the B-pillars and/or on the front fascia and/or on the rear fascia and/or near the upper edge of the windshield of the vehicle 100. Each of the imaging devices can acquire images of areas in space around the perimeter of the vehicle 100, covering in particular the movable panel zones.

The imaging devices 12 capture images of their respective surroundings. Preferably, if an imaging device 12 faces an area from which the user cannot come, for example a wall less than 1 m from the vehicle, the imaging device is deactivated. Advantageously, this feature saves the battery of the vehicle 100.

When an individual enters the detection area of one or more imaging devices 12, an unlocking system determines whether this individual wishes to access the vehicle and whether access is authorized for this individual. The unlocking system is further configured to provide feedback and guidance to the authorized user of the vehicle using, for example, LED lights or a display screen and sounds, texts, or icons.

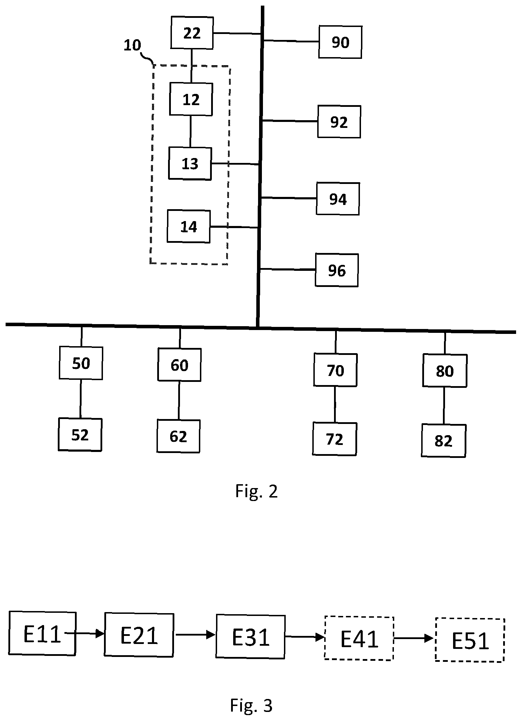

An unlocking system 10 for unlocking the movable panels of a vehicle is shown schematically in [Fig. 2], together with its peripheral components. The unlocking system 10 is mounted on a vehicle. In addition to the unlocking system 10, the following components are mounted on the vehicle: an imaging device control unit 22, an electronic control unit (ECU referred to here as a control unit) 90, a storage unit 92, a communication unit 94 and a navigation system 96, a sound device control unit 50 connected to a sound device 52, a visual element generating device control unit 60 connected to a visual element generating device 62, a vehicle seat control unit 70 connected to the seats 72 of the vehicle, a vehicle locking system control unit 80 connected to a vehicle locking system 82.

In addition to the various elements described above, many other devices can be integrated into the vehicle, such as weather, light and obstacle detectors, although these elements are not shown in Figure 1.

The control unit 90 controls the control units 50, 60, 70 and 80.

The control unit 90 also controls the imaging device control unit 22.

The control unit 90 is also used to control the unlocking system 10, which unlocks one or a plurality of movable panels of the vehicle on the basis of data provided by a number of external vehicle sensors as further explained below.

The sound device control unit 50 controls the sound device 52. The sound device 52 enables the emission of sound signals audible to the driver of the vehicle. In a motor vehicle, the sound device 52 is, for example, connected to the loudspeakers present in the vehicle.

The visual element generating device control unit 60 controls the visual element generating device 62. In a motor vehicle, the visual element generation device 62 is, for example, a head-up display comprising a device for generating images visible to the driver of the vehicle, such as a light source coupled to a screen. The screen can be, for example, a matrix of variable-transmission elements such as a liquid crystal display (LCD), or a diffuser whose upstream face is configured to be scanned by a laser beam and on which the image is formed ("laser scanning" technology).

The vehicle seat control unit 70 controls the seats 72 of the vehicle. The seats 72 are configured such that seat distance from steering wheel, vehicle seat height and inclination can be modified by the vehicle seat control unit 70.

The vehicle locking system control unit 80 controls the vehicle locking system 82. The vehicle locking system 82 is configured to lock or unlock each of the movable panels of the vehicle independently.

The communication unit 94 enables remote communication with a server located outside the vehicle, with other vehicles, infrastructures, etc. The communication unit 94 can receive information concerning the vehicle's immediate environment and/or the route taken by the vehicle. Communication unit 94 can receive information about the vehicle's immediate environment and/or the route taken by the vehicle. Communication unit 94 is connected to the navigation system, to which it can communicate the information received.

The unlocking system 10 comprises at least one imaging device 12 configured to capture at least one image in a region surrounding the vehicle 100. The imaging device 12 comprises, for example, a camera and/or a photographic camera and/or an infrared camera.

The unlocking system 10 further comprises a high-definition map generation module 13 configured to generate a high-definition map representing at least a portion of an environment of the vehicle. In the preferred embodiment, the high-definition map generation module 13 is embedded in the unlocking system 10 which is in the vehicle 100. As a variant, the high-definition map generation module 13 is located on a remote server. The at least one image captured by the imaging device 12 is sent to the remote server via the communication unit 94.

In the preferred embodiment, the high-definition map is generated by the high-definition map generation module 13 from at least one image provided by the imaging device 12. Preferably, the unlocking system 10 is configured to provide at least one image from each imaging device 12 of the vehicle 100 in order to generate the largest possible map of the surrounding of the vehicle 100.

The high-definition map contains the immediate environment of the vehicle 100 and information associated with each portion of this environment. The data regarding the environment of the vehicle 100 comprises, for example, the user's parking location and/or surrounding vehicles trajectories and/or surrounding vehicles speed and/or surrounding lane-by-lane traffic volumes and/or surrounding vehicles queues lengths and/or user's habits and preferences.

The user's habits and preferences include for instance the side of the vehicle 100 from which the registered user typically approaches the vehicle 100, the exit from a building which the user is accustomed to using when returning to the vehicle 100, the entrance to a building which the user has just used and is likely to use when exiting the building to return to the vehicle 100.

The unlocking system 10 further comprises a biometric recognition device 14, configured to identify a user of the vehicle 100 from the at least one image provided by the imaging device 12 and the high-definition map generated by the high-definition generation module 13. In the preferred embodiment, the biometric recognition device 14 and the high-definition map module 13 use the same imaging device 12. As a variant, the biometric recognition device 14 and the high-definition map module 13 use different imaging devices 12. In the preferred embodiment, the biometric recognition device 14 is embedded in the unlocking system 10 which is in the vehicle 100. As a variant, the biometric recognition 14 device may be located on a remote server. The at least one image captured by the imaging device 12 is send to the remote server via the communication unit 94.

The biometric recognition device 14 is configured to determine whether a registered user of the vehicle 100 is located in the immediate vicinity of the vehicle 100 from the images provided by the imaging device 12. Identification of a registered user is achieved by performing, for example, facial recognition and/or instance segmentation on at least one image captured by the imaging device 12.

Instance segmentation is performed to separate individuals and objects from each other within the at least one image provided by the imaging device 12. In the considered embodiment, instance segmentation is performed to identify a user of the vehicle 100 by comparing the different individuals identified within the at least one image provided by the imaging device 12 with the profile of the individuals stored in the memory 92. Once individual instances are segmented, their accessories are also detected and segmented (such as a handbag).

Facial recognition consists in recognizing facial features within the at least one image provided by image device 12 and associating these facial features with the profile of an individual stored in the memory 92.

Identification of clothes of the vehicle 100 consists in recognizing which type of clothes are worn by pedestrian 200 from at least one image captured by the imaging device 12.

Identification of a registered user of the vehicle 100 is further achieved by performing, for example, gait analysis from at least one image captured by the imaging device 12.

In the preferred embodiment, the biometric recognition device 14 comprises an artificial neural network which has been trained by deep learning to identify the vehicle user. In the preferred embodiment, the artificial neural network performs gait analysis and/or instance segmentation and/or face recognition and/or accessories detection and/or cloth classification on the images provided by the imaging device 12 and compare each individual identified in the provided images with individual profiles stored in the memory 92 to output an identity label. The identity label corresponds either to an individual profile contained in memory 92 and therefore referenced as a recognized user of the vehicle 100 to which access is authorized, or to a profile not contained in memory 92 and therefore identified as a non-user of the vehicle 100 to which access is not authorized.

In the preferred embodiment, the artificial neural network performs gait analysis, instance segmentation and face recognition, accessories detection and cloth classification on the images provided by the imaging device 12 and compare each individual identified in the provided images with individual profiles stored in the memory 92 to further output a confidence score. The confidence score represents the degree of confidence associated with the identification of each individual. The confidence score ranges, for example, from -10 (non-registered user of the vehicle identified with a high degree of certainty) to 10 (registered user of the vehicle identified with a high degree of certainty). A value of 0 means that identification is impossible or unavailable. A value of 5 corresponds to a registered vehicle user identified with medium certainty. The confidence score is evaluated using at least one cost function associated with the deep learning identification procedure used by the recognition device 14. Access to the interior of the vehicle is granted if the individual's confidence score is greater of equal to an access threshold. The threshold has, for example, a value of 6. The threshold is defined, for example, by the manufacturer of the vehicle 100 and/or is defined by the owner of the vehicle 100 and/or is based on the high-definition map generated by the high-definition map generation module 13.

In the preferred embodiment, the artificial neural network consists of three sub-networks: a gait analysis network, an instance segmentation network, and a face recognition network. Each sub-network takes the images of the driver's face and body as input and outputs a feature vector that represents the identity of the driver. The feature vectors from the three sub-networks are then concatenated and fed into a fully connected layer that reduces the dimensionality of the features. The output of the fully connected layer is then fed into an output layer that outputs an identity label and a confidence score.

The gait analysis network, for example, takes a sequence of gait images as input and outputs a feature vector that represents the identity of the driver based on the gait pattern. The gait analysis network consists of a 1D convolutional layer, a max pooling layer, a bidirectional LSTM (Long Short Term Memory) layer, and a fully connected layer. The 1D convolutional layer applies a set of filters to the input sequence to extract local features. The max pooling layer reduces the dimensionality of the features and introduces some invariance to noise and distortion. The bidirectional LSTM layer captures the temporal dynamics of the gait sequence by processing it in both forward and backward directions. The fully connected layer maps the output of the LSTM layer to a lower-dimensional feature vector.

The instance segmentation network, for example, takes a single gait image as input and outputs a feature vector that represents the identity of the driver based on the segmentation of the body parts. The instance segmentation network consists of a 2D convolutional layer, a batch normalization layer, a YOLOv3-Human layer, and a fully connected layer. The 2D convolutional layer applies a set of filters to the input image to extract local features. The batch normalization layer normalizes the features and improves the network stability and performance. The YOLOv3-Human layer detects and segments the body parts of the driver using a pre-trained model. The fully connected layer maps the output of the YOLOv3-Human layer to a lower-dimensional feature vector.

The face recognition network, for example, takes a single face image as input and outputs a feature vector that represents the identity of the driver based on the face features. The face recognition network consists of a 2D convolutional layer, a batch normalization layer, a recurrent convolutional layer, and a fully connected layer. The 2D convolutional layer applies a set of filters to the input image to extract local features. The batch normalization layer normalizes the features and improves the network stability and performance. The recurrent convolutional layer processes the features in a recurrent manner to capture the spatial dependencies of the face features. The fully connected layer maps the output of the recurrent convolutional layer to a lower-dimensional feature vector.

A concatenation layer, a fully connected layer and an output layer then process the output such that the output consists in 2 outputs units, one for the identity label and one for the confidence score. Therefore, the output size is 2.

To facilitate user identification, the biometric recognition device 14 is further configured to measure the environment of an individual entering the area of detection of at least one imaging device 12 and compare the data relating to the measured environment to the data relating to the high-definition map generated by the high-definition map generation module 13. User identification is achieved by combining the direct identification of a registered user within the at least one image provided by the imaging device 12 and the indirect identification of the registered user from the analysis of his environment through the use of a high-definition map. The measured data regarding the environment of the individual entering the area of detection of the at least one imaging device 12 comprise, for example, the side of the vehicle 100 from which the individual is located, the closest movable panel of the vehicle 100 from which the individual is located, the building access through which the individual is exiting the said building. As a variant, user identification is achieved by direct identification of a registered user only, i.e. by identifying a registered user within the at least one image provided by the imaging device 12, performing facial recognition and/or instance segmentation, and/or gait analysis if at least two images are provided, as explained herein before. User identification may then be verified by the biometric recognition device 12 using the high definition map, e.g. to provide a definitive identification of the registered user.

In the preferred embodiment, when an individual approaches the vehicle 100, the biometric recognition device 14 identifies the user, associates a confidence score to the identification, and compares the confidence score to a threshold value to validate the identification.

In the preferred embodiment, the biometric recognition device 14 compares the data relating to the measured environment to the data relating to the high-definition map generated by the high-definition map generation module 13, and modifies the confidence score accordingly, for example, by raising the confidence score if the data relating to the measured environment match the data relating to the high-definition map generated by the high-definition map generation module 13, or by lowering the confidence score if the data relating to the measured environment do not match the data relating to the high-definition map generated by the high-definition map generation module 13. Alternatively, the threshold is lowered when the data relating to the measured environment match the data relating to the high-definition map generated by the high-definition map generation module 13 or is raised when the data relating to the measured environment do not match the data relating to the high-definition map generated by the high-definition map generation module 13.

For example, when a potential user of the vehicle 100 is identified by the biometric recognition module 14 with a medium certainty (and thus outputting a confidence score of 5) approaches the vehicle from a side of the vehicle 100 from which the registered user would normally approach the vehicle 100 (as indicated per information stored in the high definition map), the biometric recognition module 14 raises the confidence score, for example by 1. Therefore, if the access threshold was 6, the registered user gains access to the vehicle 100. Alternatively, instead of raising the confidence score by 1, the threshold may be lowered by 1.

In another example, when a potential user of the vehicle 100 is identified with a confidence score of 6 and exits a building defined in the high-definition map through a different entrance from the one the registered user normally uses, the biometric recognition module 14 lowers the confidence score by 1. Thus, if the access threshold were 6, the unlocking system 10 would not authorize access to the vehicle 100, requiring a new identification of the vehicle user, for example using the vehicle access key.

Advantageously, the use of a high-definition map allows to increase the reliability of the user identification performed by the biometric recognition device 14. Indeed, the identification of a registered user does not follow a boolean logic. A user can be identified with great certainty under certain conditions, and with relative certainty under other conditions. When the identification of a user is uncertain, the use of a high-definition map containing data relating to the vehicle's environment and the user's expected interaction with this environment removes this ambiguity by confirming or denying the presence of a registered user.

In the preferred embodiment, the biometric recognition device 14 is further configured to identify the orientation and/or the behaviour of the user. To this end, the biometric recognition device 14 evaluates the orientation and/or behaviour of the individual entering the area of detection zone of at least one imaging devices 12 and then compares it with the corresponding data on the high-definition map. Advantageously, this allows a more detailed and robust information about the user's appearance and posture, which can improve the accuracy and reliability of identity verification.

For example, when a potential user of the vehicle 100 is detected on a side of the vehicle 100 with very heavy vehicle traffic, the biometric recognition module 14 lowers the confidence score by 2 points if this is not the registered user's habit.

The high-definition map allows to associate movable panels to unlock with registered users. The high-definition map further allows to associate movable panels to unlock with the behaviour or the activity of the registered user, for example, to associate unlocking vehicle front movable panel when the user is alone and associate unlocking vehicle rear movable panel when the user have a baby in his arms.

The biometric recognition device 14 further performs trajectory analysis on the images provided by the imaging device 12. Trajectory analysis allow the biometric recognition device 14 to determine whether an individual, based on his trajectory, wishes to gain access to the interior of the vehicle 100. Trajectory analysis is further used to determine which vehicle movable panel the individual is heading for. Advantageously, the invention can handle multiple users or multiple doors, such as opening the door only for the registered user or opening the door that the user wants to access. Advantageously, this function enhances user identification if the user moves towards a movable panel for which he is associated. Advantageously, this function further allows the confidence score determined by the biometric recognition device 14 to be raised if the user move towards a movable panel with which he is associated, or lowered the confidence score if the user move towards a movable panel with which he is not associated. Alternatively, the access threshold is lowered if the user moves towards a movable panel for which he is associated or raised if the user moves towards a movable panel with which he is not associated.

When a registered user of the vehicle 100 is identified by the unlocking system 10 as wanting to access the interior of the vehicle 100, the vehicle locking system control unit 80 controls the vehicle locking system 82 to unlock the movable panel of the vehicle 100 that the unlocking system 100 associates with the registered user. As a variant, when a registered user of the vehicle 100 is identified by the unlocking system 10 as wanting to access the interior of the vehicle 100, the vehicle locking system control unit 80 controls the vehicle locking system 82 to unlock all the movable panels of the vehicle.

When a registered user accesses the interior of the vehicle 100, the vehicle seat control unit 70 controls the seats 72 of the vehicle to adapt them to the user's needs.

In the preferred embodiment, the unlocking system 10 further comprises a feedback and guidance module 18 configured to provide feedback and guidance for the user of the vehicle. The feedback and guidance module 18 enhances the convenience and personalization of vehicle access for the user of the vehicle. To provide feedback and guidance to the user of the vehicle, the feedback and guidance module 18 controls, for example, the sound device control unit 50 which controls the sound device 52 and the visual element generating device control unit 60 which controls the visual element generating device 62.

The feedback and orientation module 18 is further configured to determine changes in the user's habits in order to update the high-definition map. Advantageously, this feature makes it possible to constantly improve the anticipation of the user's need and intentions, therefore enhancing user's identification, and the personalization of vehicle access for the user.

Advantageously, the unlocking system 10 can anticipate the user's needs and intentions, such as which door to open using for example the vehicle locking system control unit 80, which seat to adjust using for example the vehicle seat control unit 70, which route to take using for example the navigation system 96, and provide feedback and guidance accordingly using for example the feedback and guidance module 18, which can increase the satisfaction and comfort of vehicle access.

For example, when a small (for example having a height less than 1 meter 60), registered user of the vehicle 10 who always sits at the driver seat of vehicle 100, is identified as approaching the vehicle 100 from either the front or rear of vehicle 100, unlocking system 10 unlocks the driver door of the vehicle 100 only and adapts the distance to the steering wheel from the driver's seat to the user's height.

This invention also classifies users current clothing to adjust seats. For example, the adjustment is different between a user approaching by wearing miniskirt to the vehicle and another one approaching with a winter coat or carrying a hand bag. The mini skirt worn user might need to have extra space during sitting into the vehicle and the proper adjustment to that person's body dimensions should then be initiated once the user is installed on the seat. The same approach might be useful for a very short person, where the seat will be placed very close to the steering wheel while driving, but due to that close distance, sitting into the car might be very difficult if the seat was set as in driving position. Whereas, a winter coat wearing user, depending on habits, might want to take off and put the coat to another seat/trunk before sitting on the driver seat. The same applies for people carrying a handbag. Depending on user's habits, that user might place the bag on a seat before directing towards the driver seat.

### Process

The invention also relates to methods implemented in an electronic system equipping a vehicle. The unlocking system 10 of a vehicle 100 can, for example, be advantageously used to implement such methods.

The invention also relates to a method implemented in an electronic system equipping a vehicle shown in [Fig. 1] and comprising, as shown in [Fig. 3]:
E11) capturing at least one image in a region surrounding the vehicle,
E21) generating a high-definition map representing at least a portion of an environment of the vehicle,
E31) identifying a user of the vehicle from the at least one captured image and from the generated high-definition map.

During the step for capturing E11), at least one image in a region surrounding the vehicle is captured by an imaging device equipping the vehicle, for example, the imaging device 12 of the unlocking system 10. Preferably, the imaging device is configured to capture images of the region surrounding the vehicle only when a living being enters the range of detection of the imaging device.

During the step for generating E21), a high-definition map is generated using for example the high-definition map generation module 13 of the unlocking system 10.

During the step for identifying E31), a registered user of the vehicle is identified from the at least one image captured during the step for capturing E11) using, for example, the biometric recognition device 14 of the unlocking system 10 and from the high-definition map generated during the step for generating E21). Preferably, the identification step E31) of a registered user of the vehicle is itself performed in three steps. Firstly, the presence of a human being is detected in the at least one image captured during the step for capturing E11) and secondly, if a human being is detected, the features of the human being are compared to the registered profiles stored, for example, in a memory of the vehicle or in a distant server. Thirdly, it is determined if the detected human being shows compatible features with the high-definition map data. If the features of the human being match the features of a registered profile and the data of the high-definition map, the human being is recognized as the registered user of the vehicle corresponding to the registered profile. As a variant, if the features of the human being match the features of a registered profile, the human being is recognized as the registered user of the vehicle corresponding to the registered profile. User identification may then be confirmed by using the data of the high definition map, e.g. to provide a definitive identification of the registered user.

In the preferred embodiment, the step for identifying E31) comprises determining a confidence score associated with the determined user identity and comparing the confidence score to a threshold value in order to provide a definitive identification of the identified user. If the features of the recognized user correspond to the data of the high-definition map, the confidence score determined during step for identifying E31) is raised, for example by one or alternatively, the threshold access is lowered, for example by one. If the features of the recognized user do not correspond to the data of the high-definition map, the confidence score is lowered, for example by one or alternatively, the threshold access is raised, for example by one.

In the preferred embodiment, if the user is identified in step E31), and the confidence score is equal or greater than the threshold value, the method further comprises a step for unlocking E41) during which at least one vehicle movable panel is unlocked.

In a possible embodiment, the threshold value is determined based on the high-definition map. For example, if the environment of the vehicle has very light traffic, the threshold value is lower than if the environment of the vehicle has heavy traffic.

Preferably, if the unlocking system is carried out, the method further comprises a feedback and advice step E51) for the vehicle user during which feedback and advises are provided to the user of the vehicle, using for example the sound device 52 and the visual element generating device 62.

The invention also proposes a computer program product comprising one or more sequences of instructions which are accessible to a processor and which, when executed by said processor, cause said processor to implement a process according to one of the possible embodiments.

The invention also provides a non-transitory information storage medium, in which it stores one or more sequences of instructions which are accessible to a processor and which, when executed by said processor, cause said processor to implement a process according to one of the possible embodiments.

It should be noted that some or all of the operations of the various methods in which the above embodiments may be understood by the person skilled in the art may be accomplished by instructing the relevant hardware via the computer program, and the computer program may be stored in the computer-readable storage medium, which may include, but is not limited to: read-only memory (ROM), random access memory (RAM), disk, CD or a memory unit having a similar function.

It should be noted that in these figures, structural and/or functional elements common to the different variants may have the same references.

Various other modifications may be made to the invention within the scope of the appended claims.

As a variant, the biometric recognition system 14 is configured to perform semantic segmentation on the at least one image captured by the imaging device 12.

As a variant, the high-definition map comprises surrounding buildings and/or surrounding urban furniture.

As a variant, the biometric recognition device 14 is further configured to identify the user's outfits.

## Claims

1. An unlocking system (10) for a movable panel of a vehicle, comprising:
- an imaging device (12) configured to capture at least one image in a region surrounding the vehicle,
- a map generation module (13) configured to generate a map representing at least a portion of an environment of the vehicle, and
- a biometric recognition device (14), configured to identify a user of the vehicle from the at least one image provided by the imaging device (12) and the map generated by the map generation module (13).

2. An unlocking system (10) according to claim 1, wherein the biometric recognition device (14) is further configured to determine a confidence score associated with the user identity and compare the confidence score to a threshold value.

3. An unlocking system (10) according to claim 1 or 2, wherein the map comprises the user's parking location or surrounding vehicles trajectories or surrounding vehicles speed or surrounding lane-by-lane traffic volumes or surrounding vehicles queues lengths or user's habits and preferences.

4. An unlocking system (10) according to any of claims 1 to 3, wherein the biometric recognition device (14) is further configured to identify the user's orientation, the user's behaviour or the user's age or user's accessories or user's clothes.

5. An unlocking system (10) according to any of claim 1 to 4, further comprising a feedback and guidance module (18) configured to provide feedback and guidance for the user of the vehicle.

6. Method implemented in an electronic system equipping a vehicle, the method comprising the following steps:
- E11) capturing at least one image in a region surrounding the vehicle,
- E21) generating a map representing at least a portion of an environment of the vehicle,
- E31) identifying a user of the vehicle from the at least one captured image and from the generated map.

7. Method according to claim 6, wherein the step for identifying E31) comprises determining a confidence score associated with the determined user identity and comparing the confidence score to a threshold value.

8. Method according to claim 7, wherein if the user is identified in step E31), and the confidence score is equal or greater than the threshold value, the method further comprises a step E41) of unlocking the vehicle movable panel.

9. Method according to claim 8, further comprising, if the unlocking step E41) is carried out, a feedback and advice step E51) for the vehicle user.

10. Method according to any of claims 7 to 9, wherein the threshold value is determined based on the map.

11. A computer program product comprising one or more instruction sequences which are accessible to a processor and which, when executed by said processor, cause said processor to implement a method according to any of claims 6 to 10.

12. A non-transitory information storage medium, storing one or more sequences of instructions which are accessible to a processor and which, when executed by said processor, cause said processor to implement a method according to any of claims 6 to 10.
